# EUROPEAN PATENT SPECIFICATION

(11) **EP 4 527 747 B1**
(45) Date of publication and mention of the grant of the patent: **27.05.2026**
(21) Application number: 24201747.3
(22) Date of filing: 20.09.2024
(51) Int. Cl.: B64G 1/64, B64G 4/00

(54) **SATELLITE GRIPPER**
SATELLITENGREIFER
DISPOSITIF DE SAISIE PAR SATELLITE

(30) Priority: 20.09.2023 PL 44619223
(43) Date of publication of application: 26.03.2025
(73) Proprietor: PIAP SPACE Sp. z.o.o., 02-486 Warszawa (PL)
(72) Inventor: KOZLOWSKI, Lukasz, 08-300 Sokolow Podlaski (PL); LUKASIAK, Arkadiusz, 00-710 Warszawa (PL); JANUSIAK, Pawel, 42-221 Czestochowa (PL); PAWLOWSKI, Michal, 00-405 Warszawa (PL); LYCZEK, Aleksander, 02-594 Warszawa (PL)
(74) Representative: Adamczyk, Piotr

(56) References cited:
- CN-A- 106 628 278
- CN-A- 116 000 967
- US-A1- 2019 077 028
- US-B1- 6 840 481

## Description

The invention consists of a gripper intended for gripping satellites in outer space

The problem often occurring when intercepting a satellite which requires servicing in the absence of gravity with the use of a servicing satellite's gripper is the simultaneous rotation of the captured satellite relative to the gripper in three axes. This prevents the full synchronization of the gripper with the satellite element by which it can be safely gripped. The element in question can be a launch adapter ring (LAR) connecting the satellite with the launch vehicle due to its high level of rigidity and the fact that it is not covered by thermal insulation. The aforementioned lack of full synchronization means that with every attempt to grip the satellite, errors of the position and orientation of the gripper relative to the adapter will occur. Another problem is the differences in the shape of the cross-section between different types of LAR which make gripping the satellite difficult. Exemplary solutions of satellite grippers are disclosed in US6840481, US2013/0249229, US2015/314893 and US4718709.

US68040481 discloses - according to its abstract - an adjustable multipoint docking system which includes a plurality of adjustable grasping jaws that are aligned on a mounting surface and adapted to grab onto a wide variety of extending rings, such as conventional spacecraft adapter rings, of an on-orbit target spacecraft for various missions including spacecraft rescue, spacecraft transorbiting to a desired orbit, spacecraft transorbiting to a waste orbit, or spacecraft deorbiting.

The gripper that is closest to the invention is the one manufactured by the company OHB, the concept of which was presented on an international conference and disclosed in scientific publication titled "OHB Gripper Design and Grapple Simulations" [ESA 25.05.2016 Clean Space Industrial Day]. Such known gripper is intended for gripping one type of satellite adapter called Envisat LAR. The gripper consists of a support structure with two counter-directional carts moving linearly relative to the support structure using linear guides. The carts are driven by a screw gear consisting of a counter-threaded drive shaft and of a first and a second nut mounted on the first and the second cart, respectively. Each cart consists of linear finger guides situated at 75 degrees relative to the axis of the guides of the support structure. Each cart has one finger extending in free state from the cart through the action of a spring element. The flat central section of the support structure, parallel to the axis of the guides of the support structure, and the cart fingers delineate the bottom and two sides of the satellite launch adapter grasping envelope, respectively, with access to the aforementioned grasping envelope from the side opposite to the aforementioned bottom. The grasping envelope is equipped with sensors which detect the presence of the adapter of the satellite being gripped inside the grasping envelope.

The purpose of the invention was to develop a gripper able to grip adapters with different cross-section shapes.

This purpose is fulfilled by a gripper consisting of a support structure with two counter-directional carts moving linearly relative to the support structure using linear roller guides and driven by a screw gear. The screw gear consists of a counter-threaded drive shaft and of a first and a second nut related to the first and the second cart, respectively. Each cart contains of linear finger guides situated at an angle relative to the axis of the guides of the support structure. On the aforementioned finger guides, there are retractable gripper fingers installed which extend in free state from the carts through the action of spring elements. The flat central section of the support structure, parallel to the axis of the guides of the support structure, and the cart fingers delineate the bottom and two sides of the satellite launch adapter grasping envelope, respectively, with access to the aforementioned grasping envelope from the side opposite to the aforementioned bottom. The grasping envelope is equipped with sensors which detect the presence of the adapter of the satellite being gripped inside the grasping envelope. The invention consists in the fact that each cart has two independent fingers and two parallel linear guides for the fingers. Each linear guide of each cart is situated at the same angle relative to the axis of the guides of the support structure. Each finger has a distal end and a proximal end defined relative to the distance from the entry into the grasping envelope. The two sides of the grasping envelope are delineated by the gripping surfaces of the fingers which are substantially perpendicular to the bottom of the grasping envelope. The gripping surface of each finger in the vicinity of the proximal end of this finger has a protrusion directed towards the grasping envelope. The spring element of each finger is an extendable coil spring spanning between the support structure of the gripper and the distal end of the finger. The sensors detecting the presence of the adapter in the grasping envelope are optical sensors, advantageously operating in the infrared range.

In one of variants of the invention, the angle of the finger guide is between 46 and 60 degrees, advantageously the angle is 55 degrees.

In next variant of the invention, each finger has at least two sensors detecting the presence of the adapter in the grasping envelope.

In next variant of the invention, there are limit switches on the support structure which are activated by the carts at the moment of the greatest spread between them. Each cart is equipped with limit switches which are activated by the gripper fingers when they are maximally extended.

In another variant of the invention, the drive shaft is driven by an electric motor, advantageously by a direct current electric motor, using a gearbox.

In yet another variant of the invention, the electric motor is equipped with an encoder.

The invention simplifies the satellite gripping procedure, since it does not require precise initial positioning of the gripping satellite relative to the satellite being gripped, but nevertheless causes the gripper to be closed on the adapter of the satellite being gripped in the planned position. Design of the gripper according to the invention, including four independently moving fingers, makes it possible to quickly and efficiently grip differently shaped adapters. The high gripping velocity eliminates the risk of escape from the grasping envelope of the adapter which can maintain the correct position for a very short period of time. The self-locking property of the screw gear driving the gripper according to the invention makes it possible to maintain the grip of the fingers on the adapter without the need of using the motor.

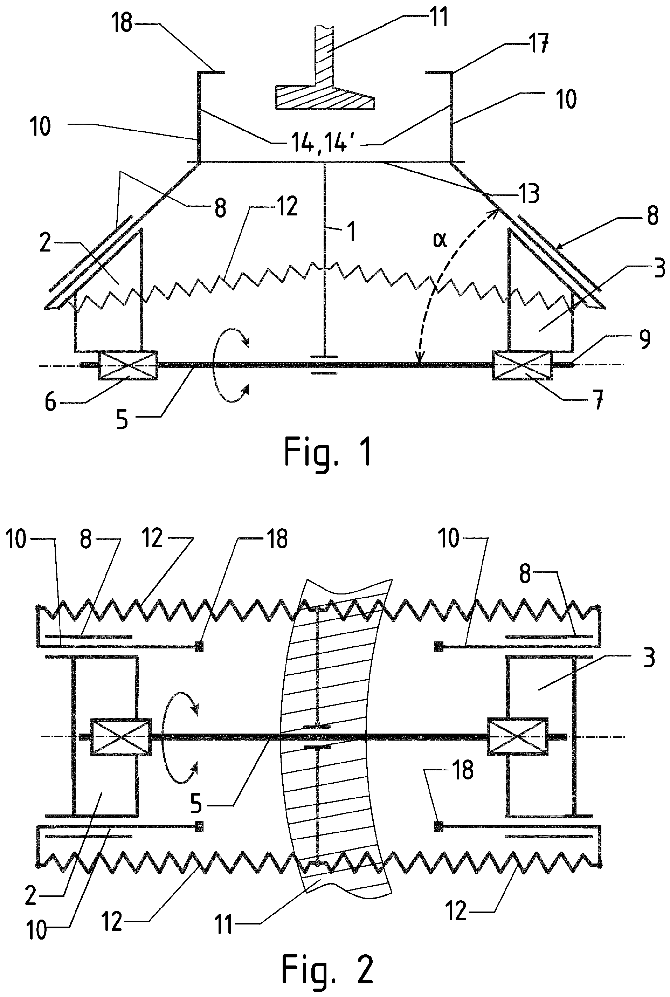

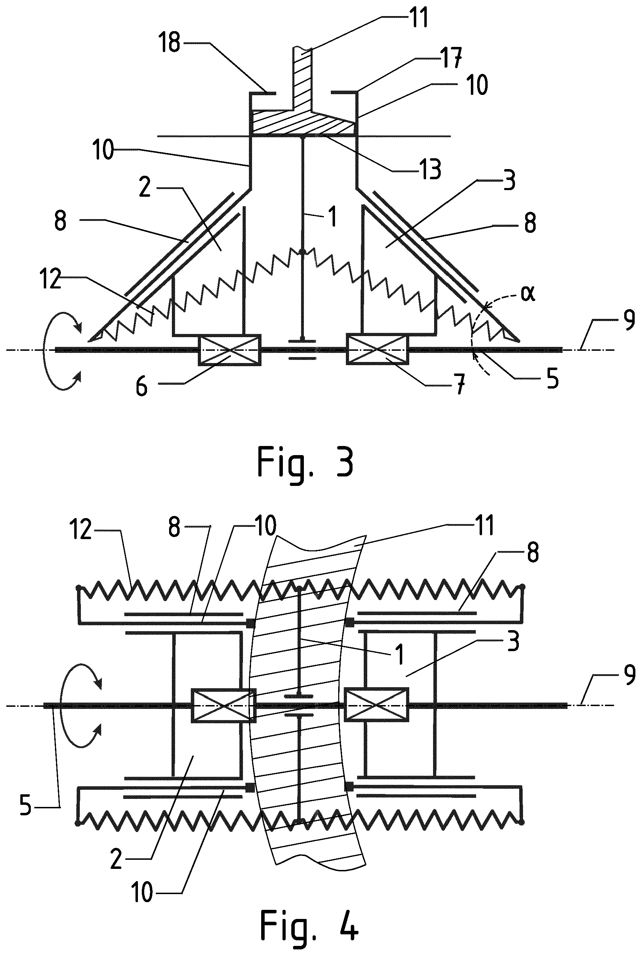

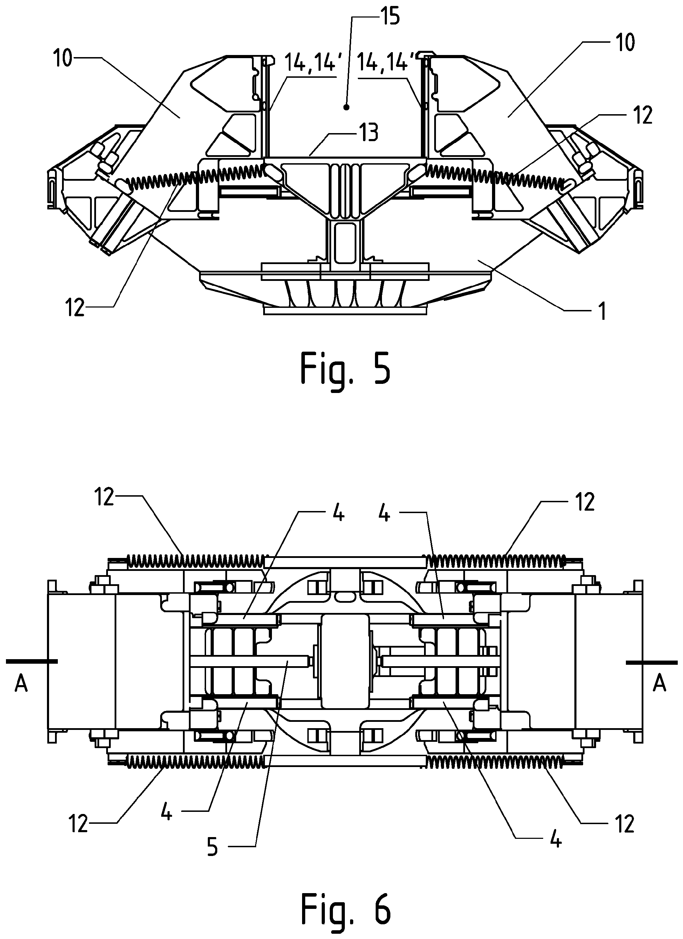

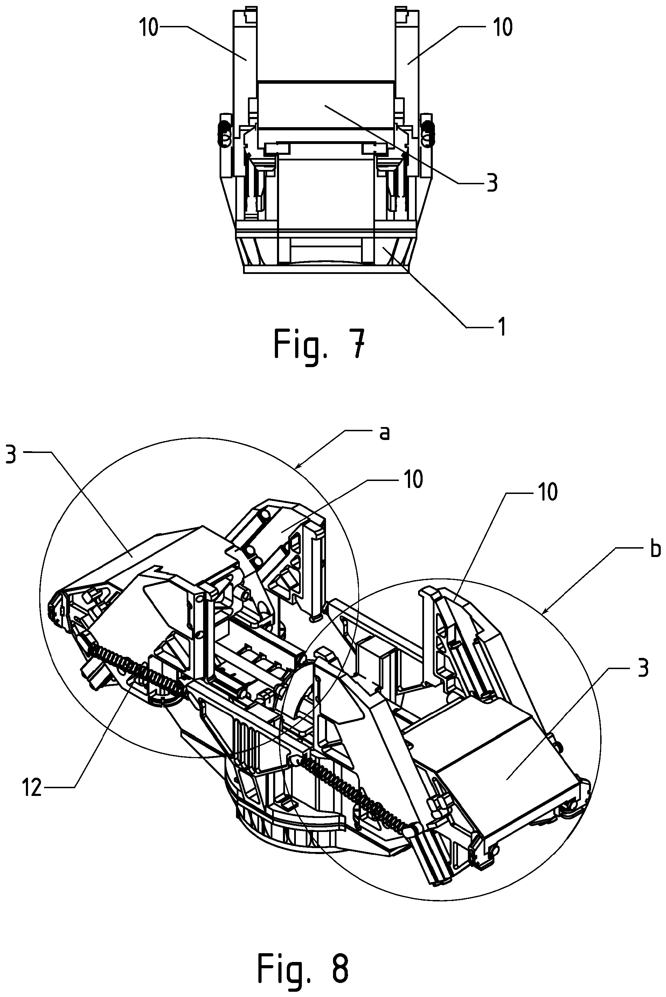

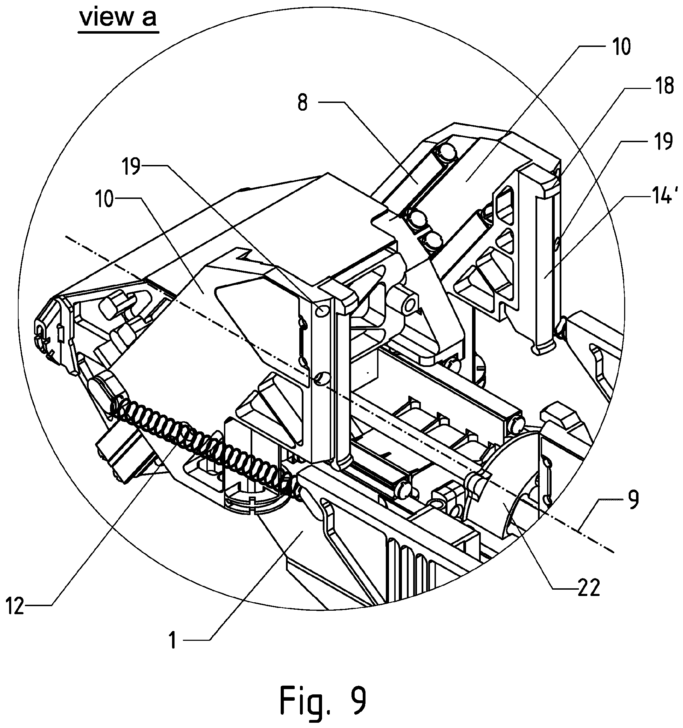

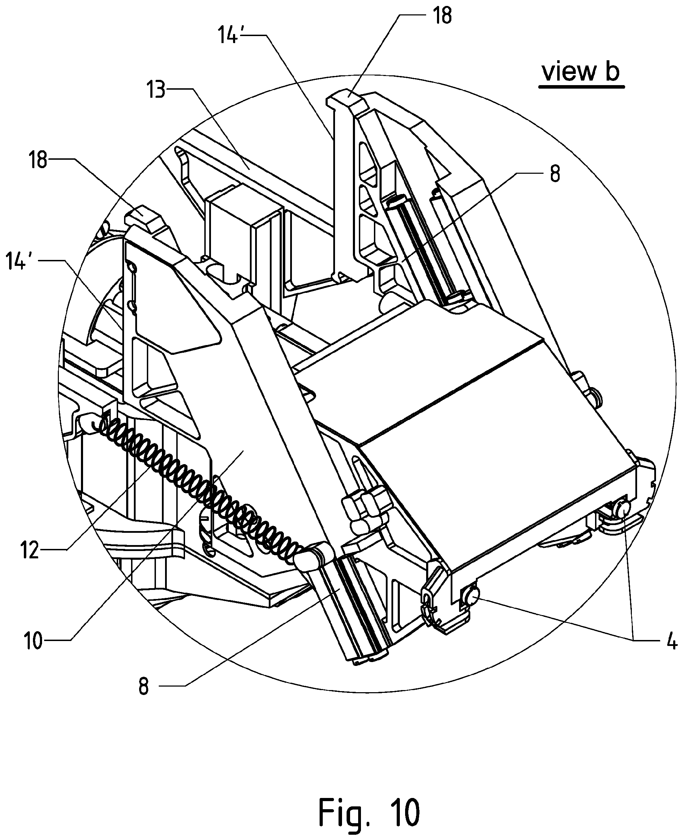

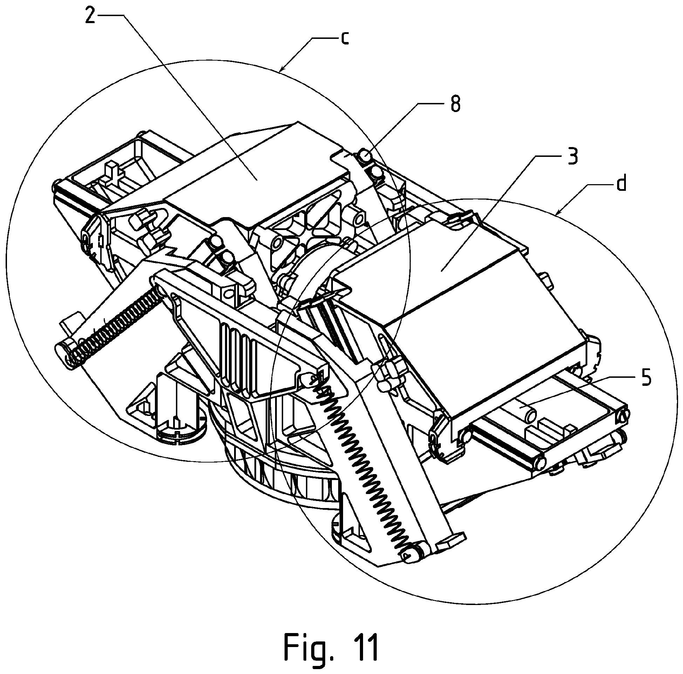

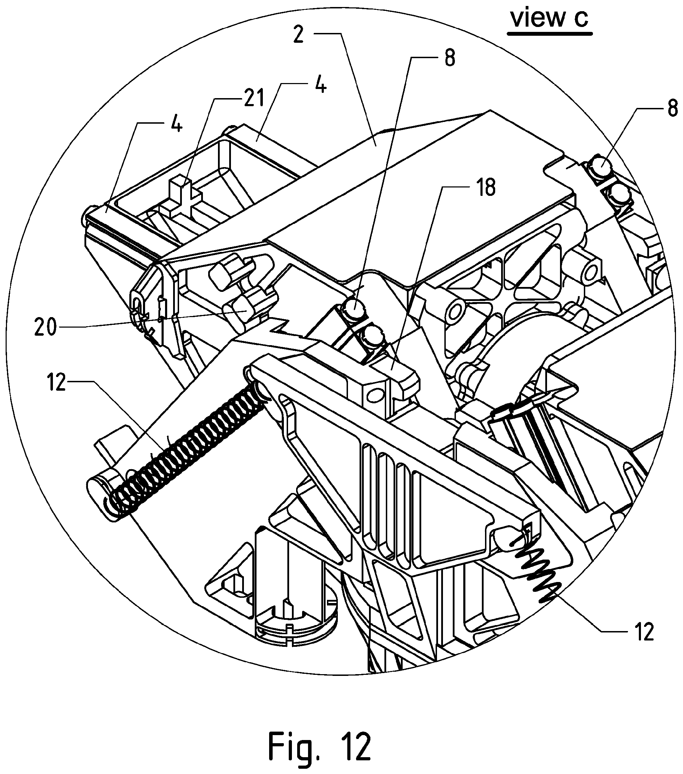

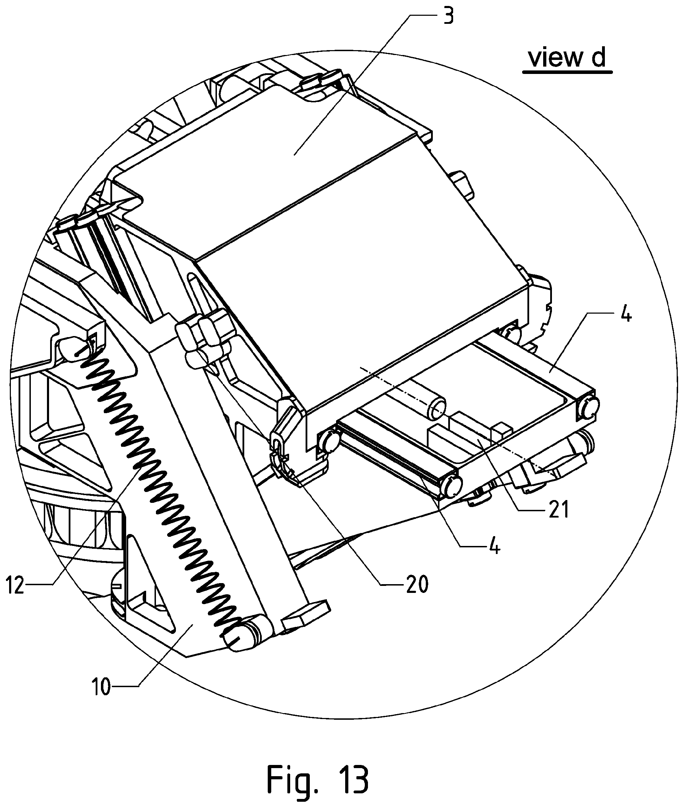

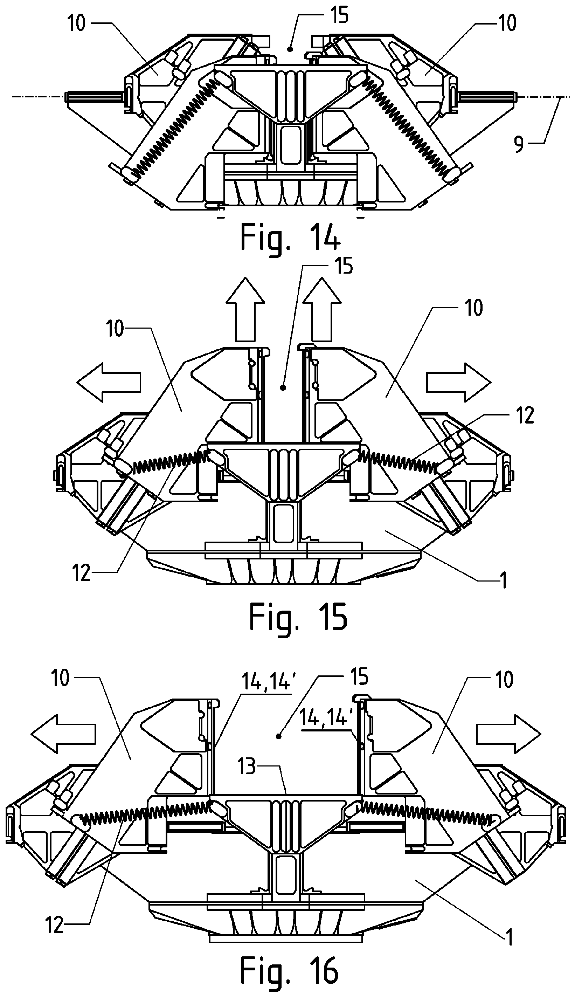

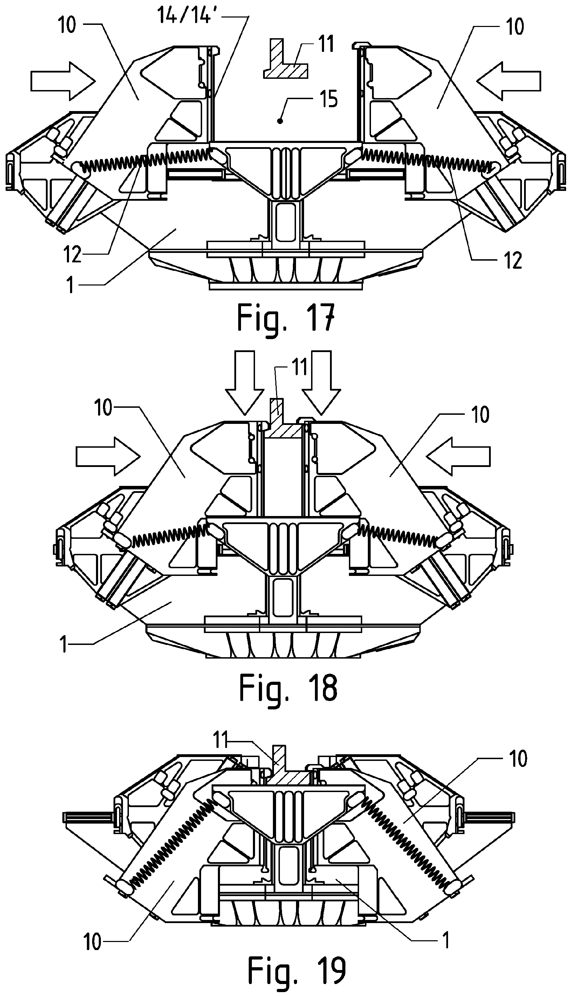

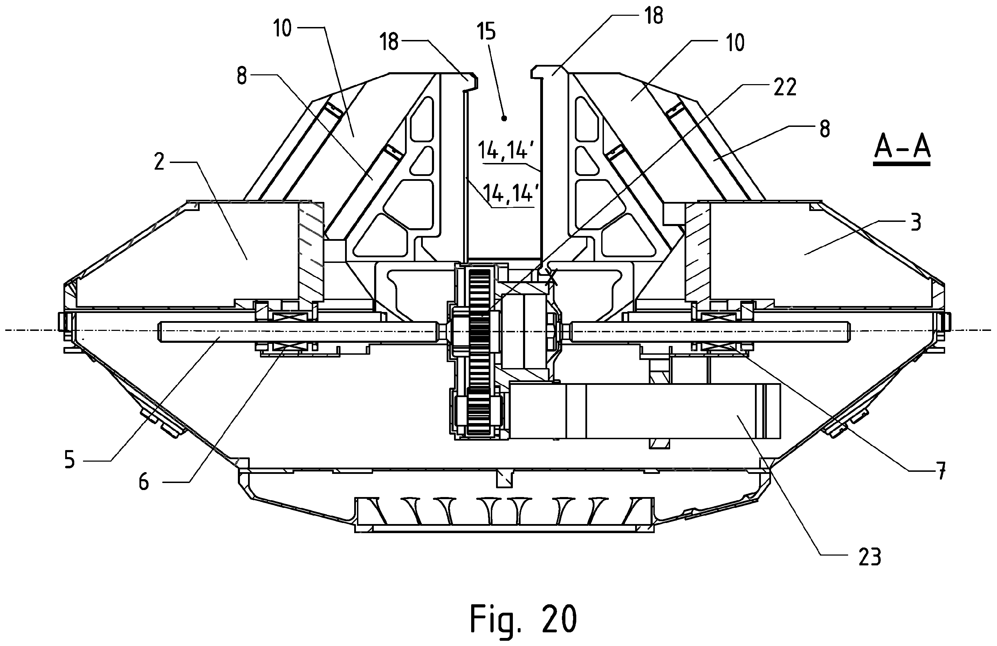

Example of the invention is described in detail below and shown on the figures of drawings. Fig.1 and Fig.2 show the side view and top view, respectively, of the kinematic diagram of the gripper according to the invention, with maximally extended fingers and the adapter of the satellite being gripped inside the grasping envelope. Fig.3 and Fig.4 show the side view and top view, respectively, of the kinematic diagram of the gripper according to the invention, with fingers clamped on the adapter of the satellite being gripped. Fig.5, Fig.6 and Fig.7 show the exemplary embodiment of the gripper according to the invention, with maximally extended fingers, in longer side view, top view and shorter side view, respectively. Fig.8 shows the gripper from Fig.5 in axonometric view from the top, whereas Fig.9 and Fig.10 show magnified sections of the view from Fig.8. Fig.11 shows an axonometric view similar to the view in Fig.8 but with the fingers maximally closed, whereas Fig.12 and Fig.13 show magnified sections of the view in Fig.11. Figures from Fig.14 to Fig.19 show, in view similar to Fig. 5, the subsequent phases of movement of the gripper fingers, starting from empty gripper with closed fingers (Fig.14), through the opening of the gripper (Fig.15 and Fig.16) in order to enclose the adapter in the grasping envelope (Fig.17), to gripping the aforementioned adapter and closing the gripper fingers on it (Fig.18 and Fig.19). Fig.20 shows the horizontal plane cross-section of the gripper with Fig. 5.

The embodiment of the gripper according to the invention comprises a support structure 1 with two counter-directional carts 2 and 3 moving on linear guides 4 mounted on support structure 1. The carts 2 and 3 move along the guides 4 with the use of a screw gear which consists of a drive shaft 5, which is counter-threaded on both sides, and of a first 6 and a second 7 nut mounted rigidly on the first 2 and the second 3 cart, respectively. Each cart 2 and 3 consists of two linear guides 8 situated at an angle relative to the axis 9 of the guides 4 of the support structure 1. On each of the aforementioned guides 8, a finger 10 of the gripper is slidingly installed. Each finger 10 in its free state, i.e. without contact with the adapter 11 of the satellite being gripped, extends from its cart 2 and 3 through the action of an extendable coil spring 12 spanning between the finger 10 and the support structure 1. The flat central section of the support structure 1 is parallel to the axis 9 of the guides 4 of the support structure 1. The central section of the support structure 1 and fingers 10 of carts 2 and 3 delineate the bottom 13 and the two sides 14 of the satellite grasping envelope 15, respectively. The entrance to the grasping envelope 15 is located opposite the aforementioned bottom 13. The grasping envelope 15 is equipped with sensors which detect the presence of the adapter 11 of the satellite being gripped inside the grasping envelope. Each linear guide 8 is positioned relative to the axis 9 of the guides 4 of the support structure 1 at the same angle α of 55 degrees, whereby the angle may be within the range from 46 to 60 degrees. Each finger 10 has a distal end 16 and a proximal end 17, whereby the distance defining the ends refers to their distance from the entrance into the grasping envelope 15. The two sides 14 of the grasping envelope 15 are delineated by the gripping surfaces 14' of the fingers 10 which in principle are perpendicular to the bottom 13 of the grasping envelope 15. The gripping surface 14' of each finger 10 in the vicinity of the proximal end 17 of this finger has a protrusion 18 directed towards the grasping envelope 15. The spring 12 of each finger 10 is mounted on the support structure 1 in the vicinity of the distal end 16 of this finger 10. The sensors 19 detecting the presence of the adapter 11 in the grasping envelope 15 are optical sensors operating in the infrared range, consisting of a light-emitting diode and a photodiode. The sensors 19 are mounted on fingers 10, at least two for each finger 10. On the support structure 1 of the gripper, there are limit switches 20 which are activated by carts 2 and 3 when they are maximally spreaded from each other. Also each cart 2 and 3 has limit switches 21 which are activated by fingers 10 when they are maximally extended upwards during movement along the guides 8. The drive shaft 5 is installed on a rotation mount in the support structure 1 and driven using a gear set 22 by direct current electric motor 23 which is equipped with an encoder, not shown on the drawing. The support structure 1 and fingers 10 are made with aluminium alloy. The guides 4 and 8 are linear ball-bearing guides. The rotation of the drive shaft 5 in one direction causes carts 2 and 3 to slide away from each other on guides 4, since drive nuts 6 and 7 are rigidly mounted to carts 2 and 3, respectively. Fingers 10, mounted on guides 8 and not loaded by the pressure on adapter 11 at the moment, extend upwards, pulled by strained springs 12. The motor 23 is powered until any of the limit switches 20 and 21 is activated. The rotation of the drive shaft 5 in opposite direction causes carts 2 and 3 to slide back towards each other, while at the same time, when fingers 10 make contact with the resistance surfaces of the support structure 1, they slide down along the guides 8. The encoder of the motor 23, together with Hall effect sensors, is also used to measure the angular velocity of motor 23 and indirectly, also the angular velocity of the drive shaft 5. The drive unit of the gripper is equipped with a temperature gauge system, not shown on the drawing, which prevents motor 23 from overheating, and a system for gauging the electric power draw by motor 23. Since the electric power draw is proportional to the clamping force of fingers 10 on the adapter 11, the electric power gauge also measures the clamping force of fingers 10 on the adapter 11 without the need for installing separate force sensors. The individual phases of operation of the exemplary gripper are shown on figures from Fig.14 to Fig.19. Despite the fact that the notions of up and down do not apply to outer space, in order to make the invention more comprehensible, the upper and lower section of the sheet, on which the aforementioned figures are shown, are used, where the axis of guides 4 is horizontal, the support structure 1 is situated in the lower section of the figures and the entrance into the grasping envelope 15 is situated on the opposite side, i.e. in the upper section. Initially, the gripper is closed (Fig.14), i.e. with carts 2 and 3 positioned next to each other and fingers 10 retracted. Once the motor 23 is powered up, the carts 2 and 3 move outwards (on the drawing to the left and right, respectively), accompanied by the movement of fingers 10 along the guides 8, causing them to extend upwards (Fig.15). The movements of carts 2 and 3, and fingers 10 are indicated by arrows. Once the fingers 10 reach their maximum upward position, the carts 2 and 3 continue to slide away from each other until the maximum opening of the gripper is achieved (Fig.16). When the adapter 11 enters the grasping envelope (Fig.17), as signalled by sensors 19, the rotation of the motor 23 is switched and the gripper starts to close. In this phase, first only the carts 2 and 3 move (on the drawing to the left and right, respectively) until all fingers 10 come into contact with the adapter 11. During this closing phase, the gripper positioning relative to the adapter 11 may still be inaccurate. Further closing of the gripper causes the fingers 10 to clamp on the adapter 11 (Fig.18), while during the clamping, the movement of the carts 2 and 3 is accompanied by the movement of the fingers 10 along the guides 8, causing them to move downwards. During this closing phase, any potential errors of relative positioning of the gripper and the adapter 11 can be further corrected. Furthermore, the horizontal spacing of the fingers 10 during the closing of the gripper automatically adjusts to the dimensions of the adapter 11, arising from the difference between its inner and outer diameter. When the clamping force of the fingers 10 on the adapter 11 reaches a high value, the fingers continue moving primarily downwards until the gripper is closed and the fingers 10 are securely clamped on the adapter 11 (Fig.19). During the final phase of closing of the gripper, any remaining error of gripper positioning relative to the adapter 11 can be corrected.

### List of desigfnations

1 - support structure
2 - first cart
3 - second cart
4 - support structure guide
5 - threaded drive shaft
6 - first drive nut
7 - second drive nut
8 - finger guide
9 - axis of the support structure guides
10 - finger
11 - satellite adapter
12 - spring
13 - bottom of the grasping envelope
14 - side of the grasping envelope
14' - gripping surface of the fingers
15 - grasping envelope
16 - distal end of the finger 10
17 - proximal end of the finger
18 - finger protrusion
19 - sensor detecting the presence of the adapter
20 - limit switch of the support structure
21 - limit switch of the cart
22 - gear set
23 - electric motor

## Claims

1. A satellite gripper consisting of a support structure (1) with two counter-directional carts (2, 3) moving linearly relative to the support structure using linear guides (4) and driven by a screw gear consisting of a drive shaft (5) which is counter-threaded on both sides, and of a first (6) and second (7) nut connected with the first and the second cart, respectively, each cart consists of linear finger guides (8) situated at an angle relative to the axes of the guides of the support structure,
wherein retractable gripper fingers (10) are mounted on the aforementioned finger guides (8), the retractable gripper fingers (10) extending in a free state from the cart through the action of spring elements (12),
the flat central section of the support structure, parallel to the axes of the guides of the support structure, and the cart fingers delineate the bottom and two sides of the satellite grasping envelope, respectively, with access to the aforementioned grasping envelope from the side opposite to the aforementioned bottom, wherein the grasping envelope is equipped with sensors (19) which detect the presence of an adapter of a satellite being gripped inside the grasping envelope, wherein each cart (2, 3) has two independent fingers (10) and two parallel linear guides (8) for the fingers (10), each linear guide (8) of each cart (2, 3) is situated at the same angle (α) relative to the axis (9) of the guides (4) of the support structure (1), each finger (10) has a distal end (16) and a proximal end (17) relative to the entrance into the grasping envelope (15), the two sides (14) of the grasping envelope (15) are delineated by the gripping surfaces (14') of the fingers (10) which are situated substantially perpendicular to the bottom (13) of the grasping envelope (15), the gripping surface (14') of each finger (10) in the vicinity of the proximal end (17) of the finger (10) has a protrusion (18) directed towards the grasping envelope (15), the spring element of each finger (10) is an extendable spring (12) spanning between the support structure (1) of the gripper and the finger (10) in the vicinity of its distal end (16), whereby the sensors detecting the presence of the adapter (11) in the grasping envelope (15) are optical sensors (19), advantageously operating in the infrared range.

2. The gripper according to Claim 1, **characterised by that** the angle (α) of the guide (8) of the finger (10) is within the range from 46 to 60 degrees, advantageously is 55 degrees.

3. The gripper according to claim 1 or 2, **characterised by that** each finger (10) has at least two sensors (19) detecting the presence of the adapter (11) in the grasping envelope (15).

4. The gripper according to claim 1 or 2 or 3, **characterised by that** the support structure (1) is equipped with limit switches (20) which are activated by the carts (2, 3) when the carts are maximally spreaded, wherein each cart (2, 3) is equipped with limit switches (21) which are activated by the fingers (10) of the gripper when they reach their maximum extension.

5. The gripper according to claim 1 or 2 or 3 or 4, **characterised by that** the drive shaft (5) is driven by an electric motor (23), advantageously by a direct current electric motor, using a gearbox (22).

6. The gripper according to claim 5, **characterised by that** the electric motor (23) is equipped with an encoder.

## Patentansprüche

1. Satellitengreifer, bestehend aus einer Trägerstruktur (1) mit zwei gegensinnig bewegbaren Schlitten (2, 3), die sich relativ zur Trägerstruktur mittels Linearführungen (4) linear bewegen und durch ein Schraubengetriebe angetrieben werden, bestehend aus einer Antriebswelle (5), die beidseitig mit gegenläufigem Gewinde versehen ist, sowie aus einer ersten (6) und einer zweiten (7) Mutter, die jeweils mit dem ersten bzw. zweiten Schlitten verbunden sind, wobei jeder Schlitten lineare Fingerführungen (8) aufweist, die unter einem Winkel relativ zu den Achsen der Linearführungen der Trägerstruktur angeordnet sind, wobei auf den genannten Fingerführungen (8) einziehbare Greiffinger (10) angeordnet sind, wobei die einziehbaren Greiffinger (10) im freien Zustand durch die Wirkung von Federelementen (12) vom Schlitten aus vorstehen, wobei ein flacher mittlerer Abschnitt der Trägerstruktur, parallel zu den Achsen der Führungen der Trägerstruktur, sowie die Finger der Schlitten den Boden (13) bzw. zwei Seiten (14) einer Satelliten-Greifhülle (15) begrenzen, **wobei** der Zugang zu der genannten Greifhülle von der dem genannten Boden (13) gegenüberliegenden Seite erfolgt, wobei die Greifhülle (15) mit Sensoren (19) ausgestattet ist, die das Vorhandensein eines Adapters (11) eines zu greifenden Satelliten innerhalb der Greifhülle (15) erfassen, wobei jeder Schlitten (2, 3) zwei separate Finger (10) sowie zwei parallele lineare Führungen (8) für die Finger (10) aufweist, wobei jede lineare Führung (8) jedes Schlittens (2, 3) unter demselben Winkel (α) relativ zur Achse (9) der Führungen (4) der Trägerstruktur (1) angeordnet ist, wobei jeder Finger (10) ein distales Ende (16) und ein proximales Ende (17) relativ zum Eintritt in die Greifhülle (15) aufweist, wobei die zwei Seiten (14) der Greifhülle (15) durch Greifflächen (14') der Finger (10) begrenzt sind, die im Wesentlichen senkrecht zum Boden (13) der Greifhülle (15) angeordnet sind, wobei die Greiffläche (14') jedes Fingers (10) in der Nähe des proximalen Endes (17) eine Vorsprung (18) aufweist, die in Richtung der Greifhülle (15) gerichtet ist, wobei das Federelement jedes Fingers (10) eine Zugfeder (12) ist, die sich zwischen der Trägerstruktur (1) des Greifers und dem Finger (10) im Bereich seines distalen Endes (16) erstreckt, wobei die Sensoren zum Erfassen des Vorhandenseins des Adapters (11) in der Greifhülle (15) optische Sensoren (19) sind, die vorzugsweise im Infrarotbereich arbeiten.

2. Greifer nach Anspruch 1, **dadurch gekennzeichnet, dass** der Winkel (α) der Führung (8) des Fingers (10) im Bereich von 46 bis 60 Grad liegt, vorzugsweise 55 Grad beträgt.

3. Greifer nach Anspruch 1 oder 2, **dadurch gekennzeichnet, dass** jeder Finger (10) mindestens zwei Sensoren (19) aufweist, die das Vorhandensein des Adapters (11) in der Greifhülle (15) erfassen.

4. Greifer nach einem der Ansprüche 1 bis 3, **dadurch gekennzeichnet, dass** die Trägerstruktur (1) mit Endschaltern (20) ausgestattet ist, die durch die Schlitten (2, 3) aktiviert werden, wenn die Schlitten ihre maximale Spreizstellung erreichen, wobei jeder Schlitten (2, 3) mit Endschaltern (21) ausgestattet ist, die durch die Finger (10) des Greifers aktiviert werden, wenn diese ihre maximale Auslenkung erreichen.

5. Greifer nach einem der Ansprüche 1 bis 4, **dadurch gekennzeichnet, dass** die Antriebswelle (5) durch einen Elektromotor (23), vorzugsweise durch einen Gleichstrommotor, unter Verwendung eines Getriebes (22) angetrieben wird.

6. Greifer nach Anspruch 5, **dadurch gekennzeichnet, dass** der Elektromotor (23) mit einem Encoder ausgestattet ist.

## Revendications

1. Dispositif de préhension de satellite comprenant une structure de support (1) avec deux chariots (2, 3) se déplaçant linéairement en sens opposés par rapport à la structure de support au moyen de guides linéaires (4) et entraînés par un mécanisme à vis comprenant un arbre d'entraînement (5) fileté en sens opposés des deux côtés, ainsi qu'un premier écrou (6) et un second écrou (7) respectivement reliés au premier et au second chariot, chaque chariot comprenant des guides linéaires de doigts (8) disposés selon un angle par rapport aux axes des guides de la structure de support, des doigts de préhension rétractables (10) étant montés sur lesdits guides (8), lesdits doigts de préhension rétractables (10) étant maintenus en position sortie à partir du chariot par l'action d'éléments ressorts (12), la partie centrale plane de la structure de support, parallèle aux axes des guides de la structure de support, et les doigts des chariots délimitant respectivement le fond et les deux côtés d'une enveloppe de préhension du satellite, avec un accès à ladite enveloppe du côté opposé audit fond, ladite enveloppe de préhension étant équipée de capteurs (19) détectant la présence d'un adaptateur (11) du satellite à saisir à l'intérieur de ladite enveloppe, **chaque** chariot (2, 3) comportant deux doigts indépendants (10) et deux guides linéaires parallèles (8) pour lesdits doigts (10), chaque guide linéaire (8) de chaque chariot (2, 3) étant disposé selon le même angle (α) par rapport à l'axe (9) des guides (4) de la structure de support (1), chaque doigt (10) comportant une extrémité distale (16) et une extrémité proximale (17) par rapport à l'entrée de l'enveloppe de préhension (15), les deux côtés (14) de l'enveloppe de préhension (15) étant délimités par les surfaces de préhension (14') des doigts (10) sensiblement perpendiculaires au fond (13) de l'enveloppe de préhension (15), la surface de préhension (14') de chaque doigt (10) comportant, à proximité de l'extrémité proximale (17), une saillie (18) dirigée vers l'intérieur de l'enveloppe de préhension (15), l'élément ressort de chaque doigt (10) étant un ressort extensible (12) s'étendant entre la structure de support (1) du dispositif de préhension et le doigt (10) à proximité de son extrémité distale (16), les capteurs détectant la présence de l'adaptateur (11) dans l'enveloppe de préhension (15) étant des capteurs optiques (19), avantageusement fonctionnant dans l'infrarouge.

2. Dispositif selon la revendication 1, **caractérisé en ce que** l'angle (α) du guide (8) du doigt (10) est compris entre 46° et 60°, de préférence égal à 55°.

3. Dispositif selon la revendication 1 ou 2, **caractérisé en ce que** chaque doigt (10) comporte au moins deux capteurs (19) détectant la présence de l'adaptateur (11) dans l'enveloppe de préhension (15).

4. Dispositif selon la revendication 1 ou 2 ou 3, **caractérisé en ce que** la structure de support (1) est équipée de fins de course (20) activées par les chariots (2, 3) lorsque ceux-ci atteignent leur écartement maximal, chaque chariot (2, 3) étant en outre équipé de fins de course (21) activées par les doigts (10) lorsque ceux-ci atteignent leur extension maximale.

5. Dispositif selon la revendication 1 ou 2 ou 3 ou 4, **caractérisé en ce que** l'arbre d'entraînement (5) est entraîné par un moteur électrique (23), de préférence un moteur à courant continu, au moyen d'un réducteur (22).

6. Dispositif selon la revendication 5, **caractérisé en ce que** le moteur électrique (23) est équipé d'un codeur.
